(19) **Europäisches Patentamt / European Patent Office / Office européen des brevets**

(11) **EP 1 175 630 B1**

(12) **FASCICULE DE BREVET EUROPEEN**

(45) Date de publication et mention
de la délivrance du brevet:
**25.11.2009 Bulletin 2009/48**

(21) Numéro de dépôt: **01911834.8**

(22) Date de dépôt: **02.03.2001**

(51) Int Cl.:
*G02B 1/10* (2006.01)     *G02C 7/02* (2006.01)

(86) Numéro de dépôt international:
**PCT/FR2001/000629**

(87) Numéro de publication internationale:
**WO 2001/067139 (13.09.2001 Gazette 2001/37)**

(54) **Procédé de finissage d'une lentille ophtalmique par étalement de vernis par force centrifuge**

Verfahren zur Endbearbeitung einer ophthalmischen Linse durch Rotationsbeschichtung von Lack

Ophthalmic lens finishing method by varnish spread through spin coating

(84) Etats contractants désignés:
**AT BE CH CY DE DK ES FI FR GB GR IE IT LI LU MC NL PT SE TR**

(30) Priorité: **06.03.2000 FR 0002848**

(43) Date de publication de la demande:
**30.01.2002 Bulletin 2002/05**

(60) Demande divisionnaire:
**09004356.3 / 2 073 044**

(73) Titulaire: **ESSILOR INTERNATIONAL (Compagnie Générale d'Optique)**
**F-94220 Charenton-le-Pont (FR)**

(72) Inventeurs:
• **TARDIEU, Pascale**
**F-75011 Paris (FR)**
• **ROBERT, Anne**
**F-94440 Villecresnes (FR)**

• **VALERI, Robert, Alan**
**Tampa, FL 33629 (US)**
• **OLIVER, Kimberly, Denise**
**Saint Petersburg, FL 33711 (US)**
• **JOHNSON, Eric, Glenn**
**Lakeland, FL 33809 (US)**
• **WHITE, Sidney, Shaw, Jr.**
**North Seminole, FL 33772 (US)**
• **DANG, Hoa, Thien**
**Tampa, FL 33626 (US)**

(74) Mandataire: **Santarelli**
**14, avenue de la Grande Armée**
**B.P. 237**
**75822 Paris Cedex 17 (FR)**

(56) Documents cités:
**EP-A1- 0 515 149     DE-A1- 1 916 092**
**GB-A- 1 414 315     US-A- 4 267 212**
**US-A- 4 417 790     US-A- 4 756 972**
**US-A- 5 902 399**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne de manière générale le finissage des lentilles ophtalmiques, plus communément appelées verres, à monter sur des montures de lunettes.

Elle vise plus particulièrement un procédé de finissage d'une surface d'une lentille ophtalmique, pour l'adapter à une prescription donnée.

La réalisation de lentilles ophtalmiques se fait habituellement en deux temps.

Dans un premier temps, il est procédé à la réalisation de la lentille semi-finie. Cette lentille semi-finie, obtenue par moulage, présente généralement une surface sphérique, asphérique ou multifocale progressive. L'autre surface qui est sphérique est destinée à être traitée afin d'adapter la lentille aux besoins du porteur.

Dans un deuxième temps, il est procédé, à la demande, au traitement de cette surface sphérique en assurant, au coup par coup, par reprise d'usinage, l'ajustement de corrections nécessaires pour satisfaire à la prescription requise, tant en ce qui concerne la puissance qu'en ce qui concerne éventuellement d'autres types de corrections, tels que, par exemple, la réalisation d'un cylindre si le porteur concerné est astigmate.

L'ébauche de la surface est réalisée au moyen de machines d'usinage rapides. Il subsiste, pour la surface, après cette première étape, des traces d'outil qu'il est nécessaire de supprimer. La surface usinée passe ainsi par un poste de doucissage et un poste de polissage.

Ces différentes étapes nécessitent des équipements spécifiques et un grand nombre d'outils. En effet, aux étapes de doucissage et de polissage, il est nécessaire d'adapter la forme des outils à la surface à traiter, afin de ne pas trop déformer la surface usinée et de respecter ainsi les courbures aux différents points de la surface.

Le procédé ainsi mis en oeuvre est à la fois coûteux en temps et d'un prix de revient élevé.

Afin de réduire le temps de finissage et donc le coût de fabrication de telles lentilles ophtalmiques, il a été proposé dans le document US 4 417 790 un procédé de finissage selon lequel on réalise un vernissage de la surface usinée, non doucie et non polie, pour obtenir une surface présentant une qualité optique acceptable.

Selon ce document, l'épaisseur de la couche de vernis appliquée sur ladite surface est de l'ordre de 10 Ra, où Ra est la rugosité moyenne arithmétique de la surface usinée.

Toutefois, ce procédé ne donne pas entière satisfaction du point de vue cosmétique et ne permet pas d'éliminer tous les défauts de la surface, certains restant visibles à la lampe à arc.

Par rapport à l'état de la technique précité, la présente invention propose un nouveau procédé rapide et permettant d'obtenir une lentille finie de très bonne qualité optique qui répond aux exigences cosmétiques.

Particulièrement l'invention propose un procédé selon la revendication 1.

Ainsi, avantageusement, selon l'invention, l'épaisseur de la couche de vernis permet d'éliminer tous les défauts de la surface de la lentille ophtalmique, qui présente alors une très bonne qualité optique.

Selon une caractéristique du procédé conforme à l'invention, la couche de vernis est obtenue par durcissement d'une composition liquide de vernis qui présente une viscosité à 25°C comprise entre environ 1000 et 3000 mPas.

La couche de vernis présente avantageusement un indice de réfraction sensiblement égal à celui de la lentille avec une tolérance de $\pm$ 0,01.

Ainsi, avantageusement, selon l'invention, la couche de vernis déposée sur la surface de la lentille et la lentille forment un seul dioptre, cette lentille répondant alors aux exigences du point de vue cosmétique puisqu'elle ne présente pas d'une part d'irisation visible à l'interface substrat-vernis et d'autre part de défauts observables en transmission, à la lampe à arc.

Avantageusement, selon un mode de réalisation de l'invention, la couche de vernis est déposée directement sur la surface usinée. Les étapes de doucissage et de polissage sont supprimées. Ce mode de réalisation est particulièrement avantageux dans le cas de la réalisation d'une surface relativement simple comme les surfaces sphériques ou toriques.

Dans un autre mode de réalisation, la couche de vernis est déposée après l'étape de doucissage. Ce mode de réalisation est plus particulièrement adapté dans le cas de surfaces dites complexes telles que par exemple des surfaces atoriques ou multifocales progressives.

L'invention est particulièrement avantageuse dans la mesure où elle permet à la fois le traitement de surfaces relativement simples et de surfaces complexes. Elle permet de diminuer le nombre de machines nécessaires et surtout de diminuer de façon drastique le nombre d'outils, ce qui facilite la gestion des procédés de production.

L'invention permet en outre de diminuer les temps de production. A titre d'exemple, les temps moyens nécessaires aux différentes étapes des procédés sont les suivants

| Procédé classique | Ebauche | 2 min |
|---|---|---|
| | Douci | 2,5 min |
| | Poli | 10 min |

(suite)

|  | Total | 14,5 min |
| Premier mode de réalisation du procédé selon l'invention (sans douci) : | Ebauche | 2 min |
|  | Dépôt de vernis | 1 min |
|  | Temps de repos | 2 min |
|  | Polymérisation vernis | 1 min |
|  | Total | 6 min |
| Deuxième mode de réalisation du procédé selon l'invention (avec douci) : | Ebauche | 2 min |
|  | Douci | 4,5 min |
|  | Dépôt de vernis | 1 min |
|  | Temps de repos | 2 min |
|  | Polymérisation vernis | 1 min |
|  | Total | 10,5 min |

Le procédé selon l'invention permet donc d'assurer le finissage d'une lentille quelle que soit la prescription.

Le procédé de l'invention permet une plus grande flexibilité et des temps de cycle plus courts.

Par ailleurs, la composition liquide de vernis utilisée dans le procédé selon l'invention peut présenter une formulation du type acrylique ou du type époxy.

Préférentiellement, la buse de distribution présente une pression de distribution de l'ordre de $0,7.10^5$Pa.

La description qui va suivre en regard des dessins annexés, donnés à titre d'exemples non limitatifs, fera bien comprendre en quoi consiste l'invention et comment elle peut être réalisée.

Sur les dessins annexés :

-    les figures 1 et 2 représentent les organigrammes de deux modes de réalisation respectivement d'un procédé de finissage d'une lentille ophtalmique utile à l'intelligence de l'invention et du procédé selon l'invention ;
-    la figure 3 est une vue schématique de principe de l'installation de mise en oeuvre du procédé selon l'invention ; et
-    la figure 4 est une vue en coupe longitudinale d'une lentille ophtalmique obtenue par le procédé selon l'invention.

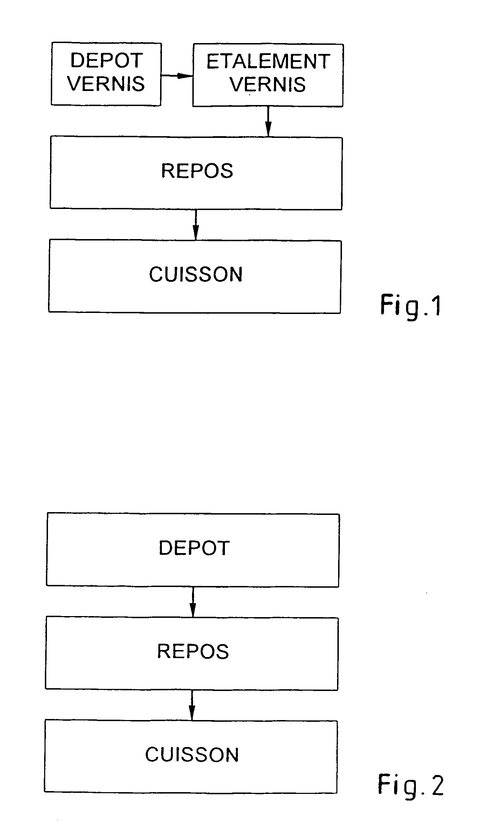

Sur les figures 1 et 2, on a représenté les étapes principales d'un procédé de finissage d'une surface d'une lentille ophtalmique à une prescription donnée.

Cette surface présente ici une rugosité moyenne arithmétique Ra inférieure à 0,5 $\mu$m, et préférentiellement comprise entre 0,05 et 0,06 $\mu$m.

Selon ce procédé, dans une première étape, on dépose sur ladite surface une couche de vernis sur une épaisseur comprise entre environ 30 Ra et. 800 Ra, où Ra est la rugosité moyenne arithmétique de cette surface, pour conférer à cette dernière un état de surface poli.

Préférentiellement, l'épaisseur de la couche de vernis déposée sur la surface est comprise entre environ 100 Ra et 800 Ra et plus préférentiellement entre 500 Ra et 800 Ra.

Pour déterminer la rugosité moyenne arithmétique Ra de la surface, il est avantageusement utilisé un profilomètre/rugosimètre FTS (Form Talysurf Series) commercialisé notamment par la Société TAYLOR HOBSON.

Cet appareil comporte une tête laser (par exemple une tête ayant la référence 112/2033-308), un palpeur (référence 112/1836) de longueur 70 mm muni d'une tête sphéro-conique de rayon 2 mm.

Cet appareil mesure, dans le plan de coupe choisie, un profil en deux dimensions. L'acquisition du profil, dans le présent cas est réalisée sur 10 mm, ce qui permet d'obtenir une courbe Z = f (x).

De ce profil on peut extraire différentes caractéristiques de surface et notamment forme, ondulation et rugosité.

Ainsi, pour déterminer la rugosité Ra, le profil subit deux traitements différents, le retrait de la forme et un filtrage qui correspond au retrait de la ligne moyenne.

Les différentes étapes pour déterminer un tel paramètre Ra sont donc les suivantes :

-    acquisition du profil Z = f (x),
-    retrait de la forme,
-    filtrage (retrait de la ligne moyenne), et
-    détermination du paramètre Ra.

L'étape d'acquisition du profil consiste à déplacer sur la surface de la lentille en question, le stylet de l'appareil précité qui enregistre les attitudes Z de la surface en fonction du déplacement X.

Lors de l'étape de retrait de la forme, le profil obtenu à l'étape précédente est rapporté à une sphère idéale,

3

c'est-à-dire une sphère pour laquelle les écarts de profil par rapport à cette sphère sont minimaux. Le mode choisi ici est LS arc, retrait du meilleur arc de cercle.

Cela permet d'obtenir ainsi une courbe représentative des caractéristiques du profil de la surface en termes d'ondulation et de rugosité.

L'étape de filtrage permet de ne conserver que les défauts correspondant à certaines longueurs d'onde. En l'occurrence, on cherche à exclure les ondulations, défauts dont les longueurs d'onde sont plus élevées que les longueurs d'onde des défauts dus à la rugosité. Le filtre est ici du type Gaussien, la coupure utilisée est de 0,08 mm.

A partir de la courbe obtenue, la rugosité moyenne arithmétique Ra est déterminée selon la formule suivante :

$$Ra = \frac{1}{N} \sum_{n=1}^{N} |Z_n|$$

où $Z_n$, est, pour chaque point, l'écart algébrique Z, par rapport à la ligne moyenne calculée au filtrage.

Selon le procédé représenté sur la figure 1, la dépose du vernis s'effectue sur la surface à l'arrêt, en une seule fois, la quantité déterminée de vernis étant placée au centre de la surface de la lentille. Puis on étale le vernis par centrifugation.

Cette centrifugation du vernis est réalisée à une vitesse de rotation de la lentille comprise entre 300 et 1000 tr/min et préférentiellement égale à environ 500 tr/min. L'étape de centrifugation présente une durée d'environ 10 secondes.

Selon le mode de réalisation de l'invention représenté sur la figure 2, le dépôt et l'étalement du vernis sur la lentille s'effectuent simultanément, en déposant le vernis sur ladite surface selon un déplacement de la buse du centre vers le bord de la lentille. Ce dépôt en spirale du vernis sur la surface est réalisé à une vitesse de rotation de la lentille comprise entre 300 et 1000 tr/min.

La vitesse de rotation de la lentille est contrôlée de manière à conserver un maximum de vernis.

Le dépôt de la couche de vernis sur la surface de la lentille est réalisé à une température ambiante (comprise entre 25 et 30°C).

Après le dépôt et l'étalement du vernis, on procède à la tension de ce dernier, en entraînant ladite lentille à une vitesse de rotation supérieure à 1000 tr/min, pendant une durée d'environ 50 secondes, en maintenant une température ambiante (comprise entre 25 et 30°C).

Puis on met au repos le vernis pendant une durée qui peut atteindre 2 à 4 minutes.

Après l'étape de repos, le vernis est réticulé par photopolymérisation au rayonnement ultraviolet.

Selon ce procédé, on utilise une composition liquide de vernis, qui présente une viscosité à 25°C comprise entre environ 1000 et 3000 mPas, ce qui facilite l'étalement et la tension du vernis sur la surface de la lentille.

Au cours des différentes étapes du procédé, il est important de contrôler la viscosité de la composition liquide de vernis mise en oeuvre, pour contrôler l'épaisseur de vernis déposée sur la surface et obtenir en définitive une surface de lentille présentant une bonne qualité optique.

En outre, le vernis une fois polymérisé présente un indice dé réfraction sensiblement égal à celui de la lentille avec une tolérance de $\pm$ 0,01, de façon à ce que la couche de vernis et le substrat que constitue la lentille forment un seul dioptre. Cela permet à la lentille de répondre aux exigences cosmétiques, du fait qu'il n'y a pas d'irisation visible à l'interface substrat-vernis et pas de défauts observables en transmission à la lampe à arc.

La lampe utilisée pour le contrôle d'aspect de la lentille après le finissage est une lampe à décharge à vapeur de mercure.

La boîte à lumière et le boîtier d'alimentation sont de la marque EUROSEP. La lampe est de marque OSRAM, référence HBO 100 W/2.

La composition de vernis utilisée peut présenter une formulation de type acrylique à base de polyuréthane.

Par exemple, elle peut comporter un monomère de type polyacrylate ou poly(méth)acrylate, et éventuellement un (méth)acryloxysilane, ou un monomère à fonction(s) époxy ou leurs mélanges.

Par exemple, elle peut comprendre au moins un monomère polyacrylate ou au moins un monomère à fonction (s) époxy. Dans ce cas, elle comprend avantageusement un mélange de monomères diacrylate et triacrylate et le monomère diacrylate comprend un polyester uréthane diacrylate aliphatique. Le monomère triacrylate est choisi parmi le triméthylolpropane éthoxylétriacrylate et le pentaerythritol triacrylate. Le ratio en poids diacrylate/triacrylate varie de 50/50 à 40/60.

Par exemple, elle peut aussi comprendre un mélange d'un monoacryloxysilane et d'un polyacrylate. Le polyacrylate comprend le dipentaerythritol pentaacrylate.

Elle comprend en outre de la silice colloïdale. Selon une autre variante, la composition de vernis utilisée comprend un oligomère époxyacrylate halogéné et préférentiellement bromé et en outre un monomère acrylate d'indice inférieur d'au moins 0,1 par rapport à celui de l'époxyacrylate halogéné.

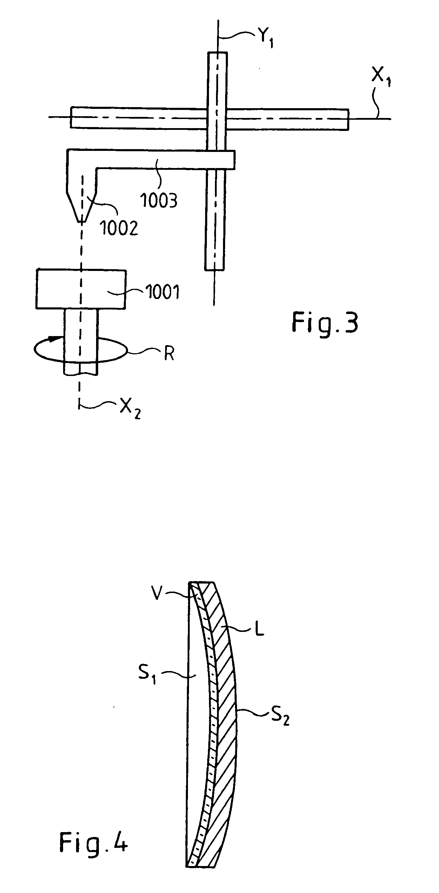

Sur la figure 3 on a représenté une machine d'application du vernis, qui comprend un support 1001 de la lentille pouvant être entraîné en rotation autour d'un axe vertical $X_2$, et un bras 1003 portant une buse de distribution à faible pression 1002 du vernis liquide, déplaçable en translation verticalement selon l'axe $Y_1$ et horizontalement selon $X_1$ par rapport au support.

La buse de distribution 1002 présente une pression de distribution du vernis liquide de l'ordre de $0,7.10^5$ Pa.

Cette machine peut être utilisée pour réaliser les deux procédés représentés sur les figures 1 et 2, à savoir le premier procédé dit statique qui consiste à déposer le vernis en une seule fois sur la lentille arrêtée, puis à étaler ledit vernis par centrifugation, et le procédé selon l'invention, dit dynamique, qui consiste à déposer le vernis en combinant la rotation de la lentille autour de l'axe $X_2$ et le déplacement du bras 1003 radialement.

Cette machine peut-être utilisée également pour un autre procédé, dit semi-dynamique, qui consiste à déposer le vernis alors que la lentille est entraînée en rotation, la buse étant en position fixe, centrée sur l'axe $X_2$ du support.

Pour réaliser le procédé représenté sur la figure 1, la buse de distribution à faible pression du vernis liquide est centrée sur l'axe $X_2$ de rotation du support 1001 de la lentille, le support étant arrêté, et elle éjecte en une seule fois une quantité déterminée de vernis au centre de la surface de la lentille ophtalmique. Puis le support 1001 de la lentille est entraîné en rotation autour de l'axe $X_2$ à vitesse lente de façon à provoquer l'étalement du vernis sur la totalité de la surface de la lentille ophtalmique. La vitesse de rotation de la lentille est ajustée de manière à éviter une perte de vernis. Pour ce faire, la vitesse de rotation du support est contrôlée. La vitesse d'entraînement en rotation du support lors de l'étalement de vernis est de l'ordre de 500 tr/min et la durée de la rotation est de l'ordre de 10 secondes.

Pour mettre en oeuvre le procédé selon l'invention, le support 1001 de la lentille est entraîné en rotation autour de l'axe $X_2$ et la buse de distribution du vernis est déplacée en translation selon l'axe $X_1$ du centre vers le bord de la lentille ou du bord vers le centre, alors qu'elle éjecte sur la surface de la lentille la quantité prévue de vernis.

La hauteur de chute du vernis est paramétrable en déplaçant le bras 1003 portant la buse 1002 selon l'axe vertical $Y_1$. Toutefois cette hauteur reste fixe pendant le dépôt.

Ce dépôt, appelé communément dépôt dynamique, du vernis sur la surface de la lentille peut s'avérer particulièrement avantageux pour recouvrir des surfaces de lentilles à forte composante torique et/ou à forte concavité.

Lors du dépôt du vernis, la rotation du support 1001 de la lentille est réalisée dans les mêmes conditions que pour la centrifugation.

Enfin, sur la figure 4, on a représenté schématiquement vue en coupe longitudinale une lentille ophtalmique L obtenue par le procédé précité, qui comprend une face avant convexe $S_2$ réalisée par moulage, et une face arrière concave $S_1$ réalisée conformément au procédé précité qui comporte une épaisseur de couche de vernis d'environ 40 $\mu$m.

Cette lentille est avantageusement obtenue selon l'invention par polymérisation d'une composition à base de bis [allycarbonate] de diéthylène glycol.

Cette lentille présente soit un indice de réfraction inférieur ou égal à 1,55, et préférentiellement de l'ordre de 1,50, soit un indice de réfraction supérieur à 1,55, et préférentiellement de l'ordre de 1,590.

Ladite lentille peut être également constituée d'un polymère à base de polycarbonate de bisphénol A.

Quatre exemples vont être explicités ci-après.

Exemple 1

| Composé | Pourcentage en Poids | Fournisseur |
|---------|---------------------|-------------|
| SR 351 | 58,25 | Cray Valley |
| CN 965 | 38,83 | Cray Valley |
| Irgacure 500 | 1,94 | Ciba Geigy |
| Irgacure 184 | 0,97 | Ciba Geigy |

SR 351 est un triméthylol propane triacrylate.

CN 965 est un polyester uréthane diacrylate aliphatique.

Exemple 2

La surface à traiter est obtenue par un procédé selon lequel l'étape d'usinage, réalisée au moyen d'une fraise, est suivie par une étape de lissage. La surface obtenue a une forme quelconque.

| | |
|---|---|
| Substrat : | CR 39 |
| Indice(ne) : | 1.502 |
| Ra après usinage: | 0.18 µm |
| Ra après lissage : | 0.06 µm |
| Epaisseur vernis : | 40 µm (670 Ra) |
| Indice vernis | 1.50 |

La composition du vernis a été explicitée dans le détail en référence aux figures 1 à 4.

Exemple 3

La surface réalisée est une sphère ou un tore, elle présente donc une symétrie. Dans le procédé mis en oeuvre dans ce cas, il n'y a pas d'étape de lissage. La machine utilisée, fabriquée par la Société MICRO-OPTICS, est du type de celle décrite dans la demande de brevet WO 98/55261.

| | |
|---|---|
| Substrat : | CR 39 |
| Indice(ne) : | 1.502 |
| Ra après usinage : | 0,34 µm |
| Epaisseur vernis : | 10 µm (30 Ra) |
| Indice du vernis : | 1.495 |

Composition du vernis :

| Composé | Pourcentage en poids | Fournisseur |
|---|---|---|
| KBM-5103 | 32.35 | Shin-Etsu |
| 1034A (silice colloïdale dans $H_2O$) | 4.38 | Nalco |
| Acétylacétonate d'aluminium | 0.02 | Aldrich |
| 4-hydroxy-4-méthyl-2-pentanone | 24.26 | |
| MA-ST (Silice colloïdale dans méthanol) | 6.47 | Nissan Chemical |
| Ebecryl 265 | 22.50 | Radcure (UCB Chemicals) |
| SR-399 | 8.99 | Sartomer |
| Darocur 1173 | 0.99 | |
| L7602 | 0.02 | Witco |
| L7500 | 0.02 | Witco |

Exemple 4

Même procédé que dans le cas de l'exemple 3, le substrat de la lentille à traiter change, il s'agit du polycarbonate (PC).

| | |
|---|---|
| Substrat : | PC |
| Indice(ne) : | 1.591 |
| Ra après usinage : | 0.05 µm |
| Epaisseur vernis : | 25 µm (500 Ra) |
| Indice du vernis : | 1.586 |

Composition du vernis :

| Composé | Pourcentage en poids | Fournisseur |
|---|---|---|
| RX00841 | 63.014 | Radcure (UCB Chemicals) |
| RX00726 | 23.443 | Radcure (UCB Chemicals) |
| Méthanol | 1.322 | |
| n-Propanol | 1.322 | |
| Glycidoxypropyltriméthoxysilane | 1.821 | Sivento |
| 2-Butanone | 6.169 | |
| Irgacure-500 | 2.644 | Ciba Geigy |
| SLF-18 surfactant | 0.264 | Olin |

Le RX00726 est un mélange d'un oligomère époxy acrylate bromé (60 %) et d'un monomère acrylate (40 %).

Le RX00841 est un mélange des mêmes composés mais dans la proportion 70/30.

**Revendications**

1. Procédé de finissage d'une surface d'une lentille ophtalmique, à une prescription donnée, comportant l'étape de sélectionner une dite lentille ophtalmique dont ladite surface est usinée, **caractérisé en ce que** ladite surface présente une rugosité moyenne arithmétique Ra inférieure à 0,5 $\mu$m, et **en ce qu'**on applique sur la surface une couche de vernis d'épaisseur comprise entre environ 30 Ra et 800 Ra, où Ra est la rugosité moyenne arithmétique de ladite surface, pour lui conférer un état de surface poli, en mettant en oeuvre une machine d'application du vernis qui comprend un support (1001) de la lentille pouvant être entraîné en rotation et un bras (1003) portant une buse de distribution (1002) à faible pression du vernis liquide, déplaçable en translation verticalement et horizontalement par rapport au support (1001), le vernis étant déposé sur ladite surface selon un déplacement de la buse du centre vers le bord ou du bord vers le centre de ladite surface, la dépose du vernis étant réalisée à une vitesse de rotation de la lentille comprise entre 300 et 1000 tr/min, la couche de vernis étant obtenue par durcissement d'une composition liquide de vernis présentant une viscosité à 25°C comprise entre environ 1000 et 3000 mPas.

2. Procédé selon la revendication 1, **caractérisé en ce que** l'épaisseur de la couche de vernis déposée sur ladite surface est comprise entre environ 100 Ra et 800 Ra, préférentiellement comprise entre 500 Ra et 800 Ra.

3. Procédé selon l'une des revendications 1 ou 2, **caractérisé en ce que** latide surface présente une rugosité arithmétique Ra compris entre 0,05 et 0,07 $\mu$m.

4. Procédé selon l'une des revendications 1 à 3, **caractérisé en ce que** le dépôt de la couche de vernis sur ladite surface est réalisé à une température comprise entre 25 et 30°C.

5. Procédé selon l'une des revendications 1 à 4, **caractérisé en ce que** le vernis est réticulé par photopolymérisation au rayonnement ultraviolet.

6. Procédé selon la revendication 5, **caractérisé en ce qu'**avant la réticulation du vernis on met au repos le vernis étalé sur ladite surface pendant une durée pouvant atteindre entre 2 à 4 minutes.

7. Procédé selon la revendication 6, **caractérisé en ce que** la température de l'étape de repos du vernis est comprise entre 25 et 30°C.

8. Procédé selon l'une quelconque des revendications 1 à 7, **caractérisé en ce que** la couche de vernis présente un indice de réfraction sensiblement égal à celui de la lentille avec une tolérance de $\pm$ 0,01.

9. Procédé selon l'une quelconque des revendications précédentes, **caractérisé en ce que** la composition liquide de vernis utilisée comprend :

- un monomère de type polyacrylate ou poly(méth)acrylate, et éventuellement un (méth)acryloxysilane, ou
- un monomère à fonction(s) époxy ou leurs mélanges.

**10.** Procédé selon l'une quelconque des revendications précédentes, **caractérisé en ce que** l'on obtient une lentille ophtalmique qui présente un indice de réfraction inférieur ou égal à 1,55.

**11.** Procédé selon la revendication 10, **caractérisé en ce que** la lentille ophtalmique obtenue présente un indice de réfraction de l'ordre de 1,50.

**12.** Procédé selon la revendication 11, **caractérisé en ce que** la lentille ophtalmique utilisée est obtenue par polymérisation d'une composition à base de bis [allylcarbonate] de diéthylène glycol.

**13.** Procédé selon l'une quelconque des revendications 11 à 12, **caractérisé en ce que** la composition liquide de vernis utilisée comprend au moins un monomère polyacrylate ou au moins un monomère à fonction(s) époxy.

**14.** Procédé selon la revendication 13, **caractérisé en ce que** la composition liquide de vernis utilisée comprend un mélange de monomères diacrylate et triacrylate.

**15.** Procédé selon la revendication 14, **caractérisé en ce que** le monomère diacrylate comprend un polyester uréthane diacrylate aliphatique.

**16.** Procédé selon la revendication 14, **caractérisé en ce que** le monomère triacrylate est choisi parmi le triméthylolpropane éthoxylétriacrylate et le pentaerythritol triacrylate.

**17.** Procédé selon la revendications **caractérisé en ce que** le ratio en poids diacrylate/triacrylate varie de 50/50 à 40/60.

**18.** Procédé selon l'une quelconque des revendications 11 à 13, **caractérisé en ce que** la composition liquide de vernis utilisée comprend un mélange d'un monoacryloxysilane et d'un polyacrylate.

**19.** Procédé selon la revendication 18, **caractérisé en ce que** le polyarcrylate comprend le dipentaerythritol pentaacrytate.

**20.** Procédé selon la revendication 18, **caractérisé en ce que** la composition liquide de vernis utilisée comprend en outre de la silice colloïdale.

**21.** Procédé selon l'une quelconque des revendications 1 à 9, **caractérisé en ce que** l'on obtient une lentille ophtalmique qui présente un indice de réfraction supérieur à 1,55.

**22.** Procédé selon la revendication 21, **caractérisé en ce que** la lentille ophtalmique obtenue présente un indice de réfraction de l'ordre de 1,590.

**23.** Procédé selon la revendication 21 ou 22, **caractérisé en ce que** la lentille ophtalmique utilisée est constituée d'un polymère à base de polycarbonate de bisphénol A.

**24.** Procédé selon l'une quelconque des revendications 21 à 23, **caractérisé en ce que** la composition liquide de vernis utilisée comprend un oligomère époxyacrylate halogéné et préférentiellement bromé.

**25.** Procédé selon la revendication 24, **caractérisé en ce que** la composition liquide de vernis utilisée comprend en outre un monomère acrylate d'indice inférieur d'au moins 0,1 par rapport à celui de l'époxyacrylate halogéné.

**26.** Procédé selon l'une quelconque des revendications 1 à 25, **caractérisée en ce** la buse de distribution (1002) présente une pression de distribution de l'ordre de $0,7.10^5$ Pa.

**Claims**

**1.** Process for finishing a surface of an ophthalmic lens to a given prescription, comprising the step of selecting an ophthalmic lens which has a machined surface, the process being **characterised in that** said surface has an arithmetic mean roughness Ra of less than 0.5 pm and **in that** a layer of varnish from approximately 30 Ra to approximately 800 Ra thick, where Ra is the arithmetic mean roughness of said surface, is applied to the surface to confer a polished surface state on it, by using a machine for applying the varnish, which includes a support (1001) for the lens which can be driven in rotation and an arm (1003) carrying a nozzle (1002) for distributing the liquid varnish at a low pressure and which is movable in translation vertically and horizontally relative to the support (1001), the varnish being deposited on said surface by movement of the nozzle from the centre toward the edge or from the edge toward the centre of said surface, the varnish being deposited at a lens rotation speed from 300 rpm to 1 000 rpm, the layer of varnish being obtained by hardening a liquid varnish composition having a viscosity at 25°C from approximately 1 000 mPas to approximately 3 000 mPas.

2. Process according to claim 1, **characterised in that** the thickness of the layer of varnish deposited on said surface is from approximately 100 Ra to approximately 800 Ra and preferably from 500 Ra to 800 Ra.

3. Process according to either claim 1 or claim 2, **characterised in that** said surface has an arithmetic mean roughness Ra from 0.05 $\mu$m to 0.07 $\mu$m.

4. Process according to any of claims 1 to 3, **characterised in that** the layer of varnish is deposited on said surface at a temperature from 25°C to 30°C.

5. Process according to any of claims 1 to 4, **characterised in that** the varnish is crosslinked by photopolymerisation using ultraviolet radiation.

6. Process according to claim 5, **characterised in that** the varnish spread onto said surface is allowed to stand for a period which can reach 2 minutes to 4 minutes before crosslinking the varnish.

7. Process according to claim 6, **characterised in that** the temperature at which the varnish is allowed to stand is from 25°C to 30°C.

8. Process according to any of claims 1 to 7, **characterised in that** the layer of varnish has a refractive index substantially equal to that of the lens, to within a tolerance of $\pm$ 0.01.

9. Process according to any of the preceding claims, **characterised in that** said liquid varnish composition used includes:

   - a polyacrylate or polymethacrylate type monomer, and possibly a (meth)acryloxysilane, or
   - a monomer with epoxy function(s) or mixtures thereof.

10. Process according to any of the preceding claims, **characterised in that** an ophthalmic lens is obtained which has a refractive index less than or equal to 1.55.

11. Process according to claim 10, **characterised in that** the ophthalmic lens obtained has a refractive index in the order of 1.50.

12. Process according to claim 11, **characterised in that** the ophthalmic lens used is obtained by polymerising a composition based on diethylene glycol bis[allylcarbonate].

13. Process according to claim 11 or claim 12, **characterised in that** the liquid varnish composition used includes at least one polyacrylate monomer or at least one monomer with epoxy function(s).

14. Process according to claim 13, **characterised in that** the liquid varnish composition used includes a mixture of diacrylate and triacrylate monomers.

15. Process according to claim 14, **characterised in that** the diacrylate monomer includes an aliphatic urethane diacrylate polyester.

16. Process according to claim 14, **characterised in that** the triacrylate monomer is chosen from trimethylolpropane ethoxylate triacrylate and pentaerythritol triacrylate.

17. Process according to claim 14, **characterised in that** the ratio by weight of diacrylate to triacrylate varies from 50/50 to 40/60.

18. Process according to any of claims 11 to 13, **characterised in that** the liquid varnish composition used includes a mixture of a monoacryloxysilane and a polyacrylate.

19. Process according to claim 18, **characterised in that** the polyacrylate includes dipentaerythritol pentaacrylate.

20. Process according to claim 18, **characterised in that** the liquid varnish composition used further includes colloidal silica.

21. Process according to any of claims 1 to 9, **characterised in that** an ophthalmic lens is obtained which has a refractive index greater than 1.55.

22. Process according to claim 21, **characterised in that** the ophthalmic lens obtained has a refractive index in the order of 1.590.

23. Process according to either claim 21 or claim 22, **characterised in that** the ophthalmic lens used is made of a polymer based on bisphenol A polycarbonate.

24. Process according to any of claims 21 to 23, **characterised in that** the liquid varnish composition used includes a halogenated, preferably bromine-containing, epoxy acrylate oligomer.

25. Process according to claim 24, **characterised in that** the liquid varnish composition used further includes an acrylate monomer having an index at least 0.1 lower than that of the halogenated epoxy acrylate.

26. Process according to any of claims 1 to 25, **characterised in that** the distribution pressure of the distribution nozzle (1002) is in the order of 0.7 x 105 Pa.


**Patentansprüche**

1. Endbearbeitungsverfahren einer Fläche einer ophthalmischen Linse mit gegebener Verschreibung, umfassend den Schritt des Auswählens einer ophthalmischen Linse deren Fläche bearbeitet ist, **dadurch gekennzeichnet, dass** die Fläche eine arithmetisch gemittelte Rauhigkeit Ra von weniger als 0,5 $\mu$m aufweist, und **dadurch**, das an der Fläche eine Lackschicht aufgebracht wird, von einer Dicke enthalten zwischen etwa 30 Ra und 800 Ra, wobei Ra die arithmetisch gemittelte Rauhigkeit der Fläche ist, um den Zustand einer polierten Fläche bereitzustellen, wobei eine Lackaufbringungsvorrichtung verwendet wird, umfassend eine Stütze (1001) der Linse, die rotationsmäßig angetrieben werden kann und einen Arm (1003) der eine Verteilungsdüse (1002) vom Niederdrucktyp, für flüssigen Lack trägt, translatorisch vertikalwärts und horizontalwärts versetzbar mit Bezug auf die Stütze (1001), wobei der Lack an der Fläche aufgebracht wird entsprechend einer Versetzung der Düse von der Mitte hin zu dem Rand oder von dem Rand hin zu der Mitte der Fläche, wobei die Aufbringung des Lackes dargestellt wird bei einer Rotationsgeschwindigkeit der Linse, enthalten zwischen 300 und 1000 U/min, wobei die Lackschicht erhalten wird mittels Härtung einer flüssigen Lackzusammensetzung, die bei 25°C eine Viskosität aufweist, enthalten zwischen etwa 1000 und 3000 mPas.

2. Verfahren nach Anspruch 1, **dadurch gekennzeichnet, dass** die Lackschichtdicke, die an der Fläche aufgebracht ist enthalten ist zwischen etwa 100 Ra und 800 Ra, bevorzugt enthalten zwischen 500 Ra und 800 Ra.

3. Verfahren nach einem der Ansprüche 1 oder 2, **dadurch gekennzeichnet, dass** die Fläche eine arithmetisch gemittelte Rauhigkeit Ra aufweist, enthalten zwischen 0,05 und 0,07 $\mu$m.

4. Verfahren nach einem der Ansprüche 1 bis 3, **dadurch gekennzeichnet, dass** die Aufbringung der Lackschicht an der Fläche ausgeführt wird bei einer Temperatur, die enthalten ist zwischen 25 und 30°C.

5. Verfahren nach einem der Ansprüche 1 bis 4, **dadurch gekennzeichnet, dass** der Lack vernetzt ist mittels Photopolymerisation bei Ultraviolettbestrahlung.

6. Verfahren nach Anspruch 5, **dadurch gekennzeichnet, dass** vor der Vernetzung des Lackes man den Lack ruhen lässt, verteilt an der Fläche während einer Dauer, die zwischen 2 und 4 Minuten erreichen kann.

7. Verfahren nach Anspruch 6, **dadurch gekennzeichnet, dass** die Temperatur im Schritt des Ruhens des Lackes enthalten ist zwischen 25 und 30°C.

8. Verfahren nach einem der Ansprüche 1 bis 7, **dadurch gekennzeichnet, dass** die Lackschicht einen Brechungsindex aufweist im Wesentlichen gleich zu jenem der Linse mit einer Toleranz von $\pm$ 0,01.

9. Verfahren nach einem der vorangegangenen Ansprüche, **dadurch gekennzeichnet, dass** die verwendete flüssige Lackzusammensetzung umfasst:

   - ein Monomer vom Typ Polyacrylat oder Polymethacrylat und gegebenenfalls (Meth)-acryloxysilan, oder
   - ein Monomer mit Epoxyfunktion(en) oder deren Mischungen.

10. Verfahren nach einem der vorangegangenen Ansprüche, **dadurch gekennzeichnet, dass** eine ophthalmische Linse erhalten wird, die einen Brechungsindex von weniger oder gleich zu 1,55 aufweist.

11. Verfahren nach Anspruch 10, **dadurch gekennzeichnet, dass** die erhaltene ophthalmische Linse einen Brechungsindex in der Größenordnung von 1,50 auf weist.

12. Verfahren nach Anspruch 11, **dadurch** gekenntzeichnet, dass die ophthalmische verwendete Linse erhalten wird durch Polymerisation einer Zusammensetzung, basierend auf Diethylen-glycol-bis-[allylcarbonat].

13. Verfahren nach einem der Ansprüche 11 bis 12, **dadurch gekennzeichnet, dass** die verwendete flüssige Lackzusammensetzung umfasst, zumindest ein Polyacrylatmonomer oder zumindest ein Monomer mit Exoxyfunktion (en).

14. Verfahren nach Anspruch 13, **dadurch gekennzeichnet, dass** die verwendete flüssige Lackzusammensetzung eine Mischung von Diacrylat und Triacrylat Monomeren umfasst.

15. Verfahren nach Anspruch 14, **dadurch gekennzeichnet, dass** das Diacrylat Monomer ein aliphatisches Urethan Diacrylat Polyester umfasst.

16. Verfahren nach Anspruch 14, **dadurch gekennzeichnet, dass** das Triacrylat Monomer ausgewählt ist unter Trimethylpropan-Ethoxyltriacrylat und Pentaerythritol-Triacrylat.

17. Verfahren nach Anspruch 14, **dadurch gekennzeichnet, dass** das Verhältnis im Gewicht Diacrylat / Triacrylat variiert zwischen 50/50 und 40/60.

18. Verfahren nach einem der Ansprüche 11 bis 13, **dadurch gekennzeichnet, dass** die verwendete flüssige Lackzusammensetzung eine Mischung eines Monoacryloxysilanes und eines Polyacrylates umfasst.

19. Verfahren nach Anspruch 18, **dadurch gekennzeichnet, dass** das Polyacrylat ein Dipentaerythriotol-Pentaacrylat umfasst.

20. Verfahren nach Anspruch 18, **dadurch gekennzeichnet, dass** die verwendete flüssige Lackzusammensetzung ferner kolloidales Siliziumdioxyd umfasst.

21. Verfahren nach einem der Ansprüche 1 bis 9, **dadurch gekennzeichnet, dass** man eine ophthalmische Linse erhält, die einen Brechungsindex von mehr als 1,55 aufweist.

22. Verfahren nach Anspruch 21, **dadurch gekennzeichnet, dass** die erhaltene ophthalmische Linse einen Brechungsindex aufweist in der Größenordnung von 1,590.

23. Verfahren nach Anspruch 21 oder 22, **dadurch gekennzeichnet, dass** die verwendete ophthalmische Linse gebildet ist aus einem Polymer, basierend auf Bisphenol-A-Polycarbonat.

**24.** Verfahren nach einem der Ansprüche 21 bis 23, **dadurch gekennzeichnet, dass** die verwendete flüssige Lackzusammensetzung ein halogeniertes und bevorzugt bromiertes oligomeres Epoxyacrylat umfasst.

**25.** Verfahren nach Anspruch 24, **dadurch gekennzeichnet, dass** die verwendete flüssige Lachzusammensetzung ferner ein Acrylatmonomer umfasst mit einem Index geringer um zumindest 0,1 mit Bezug auf jenen von halogeniertem Epoxyacrylat.

**26.** Verfahren nach einem der Ansprüche 1 bis 25, **dadurch gekennzeichnet, dass** die Verteilungsdüse (1002) eine Druckverteilung aufweist in der Größenordnung von $0,7.10^5$ Pa.

```
┌──────────┐     ┌──────────────┐
│  DEPOT   │────▶│  ETALEMENT   │
│  VERNIS  │     │   VERNIS     │
└──────────┘     └──────────────┘
                        │
                        ▼
┌──────────────────────────────────┐
│              REPOS               │
└──────────────────────────────────┘
                 │
                 ▼
┌──────────────────────────────────┐
│             CUISSON              │
└──────────────────────────────────┘
```

Fig.1

```
┌──────────────────────────────────┐
│              DEPOT               │
└──────────────────────────────────┘
                 │
                 ▼
┌──────────────────────────────────┐
│              REPOS               │
└──────────────────────────────────┘
                 │
                 ▼
┌──────────────────────────────────┐
│             CUISSON              │
└──────────────────────────────────┘
```

Fig.2

Fig.3

Fig.4

14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4417790 A
- WO 9855261 A